# EUROPEAN PATENT APPLICATION

(11) **EP 0 905 991 A2**
(43) Date of publication of application: **31.03.1999**
(21) Application number: 98118361.9
(22) Date of filing: 29.09.1998
(51) Int. Cl.: H04Q 7/32

(54) **Mobile communication network and method of down-loading mobile station operating program**

(30) Priority: 30.09.1997 JP 282573/97
(71) Applicant: NEC CORPORATION, Tokyo (JP)
(72) Inventor: Kimura, Hiroaki, Minato-ku, Tokyo (JP)
(74) Representative: Patentanwälte Dipl.-Ing. R. Splanemann Dr. B. Reitzner Dipl.-Ing. K. Baronetzky

(57) **Abstract**

The object of the present invention is to enable down-loading the latest version program without imposing a economic burden on the owner of a mobile station and requiring the owner of the mobile station to execute special operation. Therefore, a network control station sends the latest version number using a channel for control and cyclicly sends each part when the latest program is divided into plural parts in a packet format using a newly provided channel for maintenance. Each mobile station switches a receiving channel to the channel for maintenance if a version number sent via the channel for control and the version number of a program currently used by the mobile station are not equal and fetches the contents of a packet sent via the channel for maintenance.

## Description

### BACKGROUND OF THE INVENTION

### 1. Field of the Invention

The present invention relates to technique for down-loading a program for operating a mobile station such as a mobile telephone.

### 2. Description of the Related Art

A mobile communication network such as a mobile satellite communication network is composed of one communication satellite, one network control station, plural fixed communication stations and plural mobile stations. In such a network, generally, CPU and a memory for storing a program are provided to each mobile station and a mobile station is constituted so that it executes predetermined operation according to a program stored in the memory for storing a program.

If new service or a new function is added to a mobile communication network, a memory for storing a program installed in a mobile station is required to be replaced with a memory for storing a program to which a new program is written to utilize the newly added service or function in the mobile station.

Therefore, a method of connecting a mobile station to automatic down-loading device, further connecting the automatic down-loading device and a central station via a telecommunication line and down-loading the latest version program from the central station to the mobile station is proposed as disclosed in Japanese published unexamined patent application No. Hei 7-271692 for example.

According to the method of using the automatic down-loading device and down-loading a program via the telecommunication line, as such an automatic down-loading device is required to be purchased, there is a problem that the owner of a mobile station bears a very large economic burden. Further, there is also a problem that if the owner of a mobile station does not execute operation for down-loading positively, a program cannot be upgraded to the latest version program.

### SUMMARY OF THE INVENTION

The object of the present invention is to enable down-loading the latest version program without requiring the owner of a mobile station to bear an economic burden and requiring the owner of the mobile station to execute special operation.

To achieve the above object, according to a method of down-loading a mobile station operating program according to the present invention, in a mobile communication network provided with a network control station and plural mobile stations, the network control station sends the latest version number of a program for operating a mobile station using a channel for control and cyclicly sends each part of the latest version program divided into plural parts in a packet format using a newly provided channel for maintenance, each mobile station judges whether the latest version number sent via the channel for control and the version number of the program for operating the mobile station stored in a memory for storing a program of the mobile station are equal or not, if they are not equal, a receiving channel is switched from the channel for control to the channel for maintenance, the contents of a packet sent via the channel for maintenance are stored in a memory for updating a program and the latest version program stored in the memory for updating the program is copied in the memory for storing the program by storing the contents of all packets in the memory for updating the program.

Also, according to the method of down-loading the mobile station operating program according to the present invention, to prevent program down-loading processing from interfering with calling/call receiving processing, a mobile station judges whether a call is made or not every time the contents of a packet are stored in a memory for updating a program, judges whether it is timing when a called message sent via a channel for control may be received by the mobile station or not and if the mobile station judges that a call is made, calling is given priority, if the mobile station judges that it is timing when a called message may be received, a receiving channel is further switched from a channel for maintenance to the channel for control and the mobile station judges whether a call to the mobile station is made or not, and if the mobile station judges that a call is made, receiving the call is given priority.

Also, according to the method of down-loading the mobile station operating program according to the present invention, to reduce time required for down-loading the latest version program and the capacity of a memory for updating the program provided to a mobile station, a network control station cyclicly sends each part of the compressed and encoded latest version program divided in plural parts in a packet format using a channel for maintenance instead of cyclicly sending each part of the latest version program divided in plural parts in a packet format using the channel for maintenance and when a mobile station copies the contents stored in the memory for updating the program in the mobile station in a memory for storing a program, the mobile station copies the contents in the memory for storing the program after the contents are decompressed and decoded.

### BRIEF DESCRIPTION OF THE DRAWINGS

Fig. 1 shows an example of a network to which the present invention is applied;
Fig. 2 is a block diagram showing an embodiment of a part related to down-loading a program of a network control station 2;
Fig. 3 shows the contents of a memory 23;
Fig. 4 shows a format of a channel for control 5;
Fig. 5 shows a format of a channel for maintenance 7;
Fig. 6 is a block diagram showing an embodiment of a part related to down-loading a program of a mobile station 4;
Fig. 7 is a flowchart showing an example of processing by the mobile station 4;
Fig. 8 is a block diagram showing another embodiment of the network control station 2; and
Fig. 9 is a flowchart showing another example of processing by the mobile station 4.

### DETAILED DESCRIPTION OF THE PREFERRED EMBODIMENTS

Next, referring to the drawings, embodiments of the present invention will be described in detail.

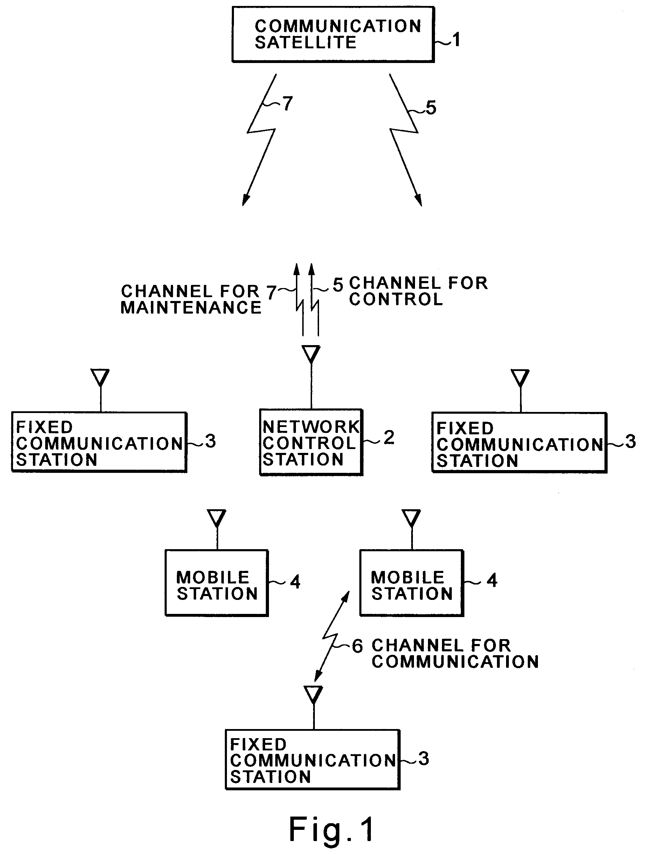

Fig. 1 shows a mobile satellite communication network to which the present invention is applied. The mobile satellite communication network is composed of one communication satellite 1, one network control station 2, plural fixed communication stations 3 and plural mobile stations 4. The mobile satellite communication network is provided with a channel for maintenance 7 in addition to a channel for control 5 and a channel for communication 6 with which this type of network is respectively normally provided.

The channel for control 5 means a channel for transmitting control information and network information respectively required for call processing and the above two information is sent from the network control station 2 to the whole network via the communication satellite 1. The channel for communication 6 means a channel used for communication between a fixed communication station 3 and a mobile station 4. The channel for maintenance 7 means a channel used for down-loading the latest version program and the latest version program is sent from the network control station 2 to the whole network via the communication satellite 1.

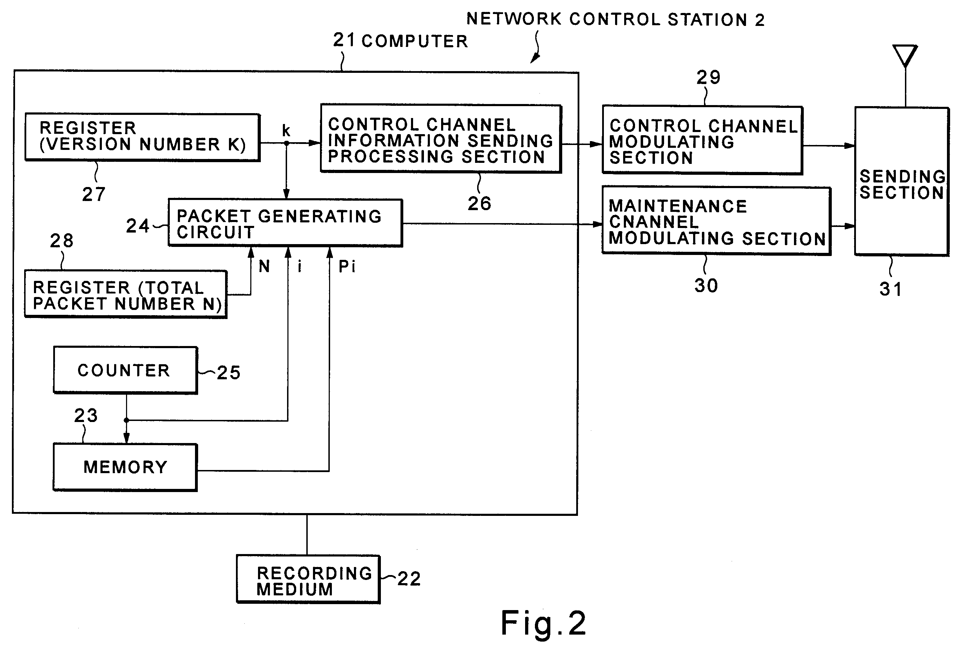

Fig. 2 is a block diagram showing an embodiment of a part related to down-loading a program of the network control station 2 shown in Fig. 1. The part is composed of a computer 21, a recording medium 22, a control channel modulating section 29, a maintenance channel modulating section 30 and a sending section 31. The computer 21 is provided with a memory 23, a packet generating circuit 24, a counter 25, a control channel information sending processing section 26 and registers 27 and 28. The recording medium 22 connected to the computer 21 is a disk, a semiconductor memory and the other recording medium for example. A program for the network control station is stored on the recording medium 22. The program instructs the computer 21 to function as the packet generating circuit 24, the counter 25 and the control channel information sending processing section 26 by being read by the computer 21 and controlling the operation of the computer 21.

The counter 25 increments its count value by one every fixed time and is a counter of a cyclic type that its count value is reset to an initial value 1 if it is stepping timing when its count value is a predetermined value N.

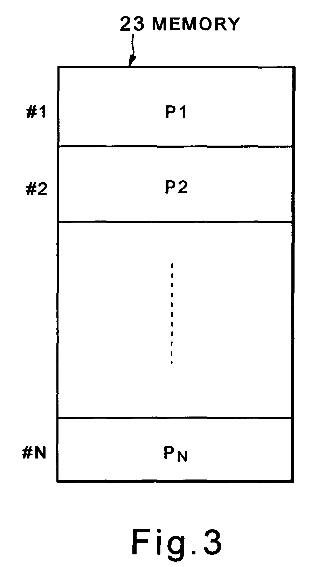

Fig. 3 shows the contents of the memory 23. As shown in Fig. 3, each part (a divided part of a program) P1 to PN when the latest version program for instructing a mobile station 4 to execute predetermined operation is equally divided into N pieces is stored in continuous areas Nos. 1 to N. The memory 23 outputs a divided part Pi of a program stored in an area No. i of the memory 23 if the count value of the counter 25 is i (1 ≤ i ≤ N). The divided parts P1 to PN of the program stored in each area Nos. 1 to N of the memory 23 are cyclicly output according to the count value of the counter 25.

The version number (k in this embodiment) of the latest program is stored in the register 27. The total number N of packets required for transferring the program stored in the memory 23 is stored in the register 28.

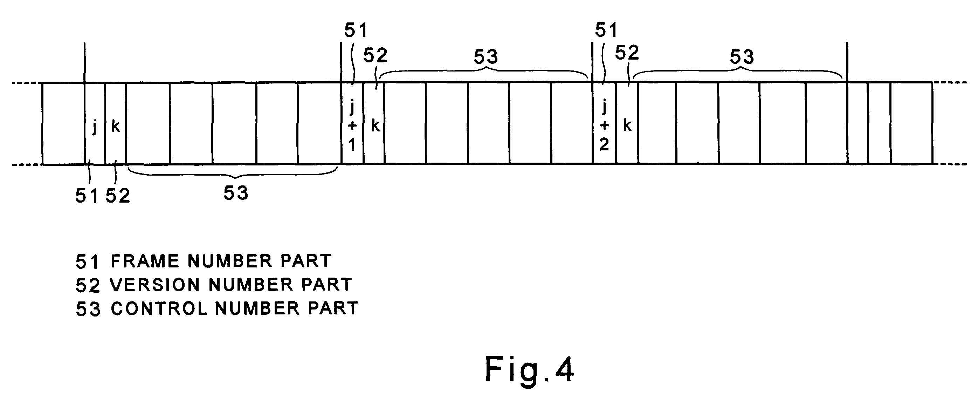

Fig. 4 shows a format of the channel for control 5 generated by the control channel information sending processing section 26. As shown in Fig. 4, a frame number j (1 ≤ j ≤ M) is stored in a frame number part 51. The version number k stored in the register 27 is stored in a version number part 52. Control channel information including a message for control is generated and stored in a control message part 53.

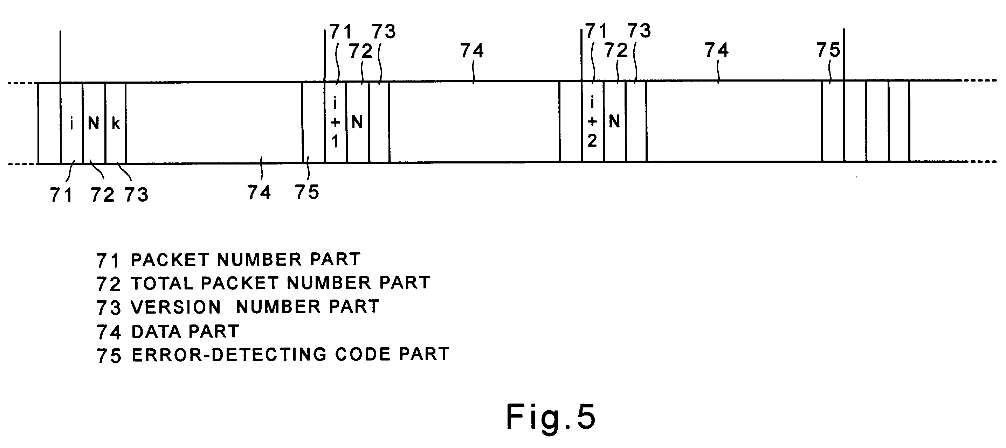

Fig. 5 shows a format of the channel for maintenance generated by the packet generating circuit 24. As shown in Fig. 5, the count value i (a packet number) of the counter 23 is stored in a packet number part 71. The total packet number N stored in the register 28 is stored in a total packet number part 72. A version number k stored in the register 27 is stored in a version number part 73. A divided part Pi of a program read from the memory 23 is stored in a data part 74. A packet including an error-detecting code is generated in an error-detecting code part 75. The packet number i stored in the packet number part 71 by the packet generating circuit 24 has predetermined relation (i = j for example) to the frame number j stored in the frame number part 51 by the control channel information sending processing part 26. To hold such relation, the counter 25 is operated in synchronization with the control channel information sending processing section 26.

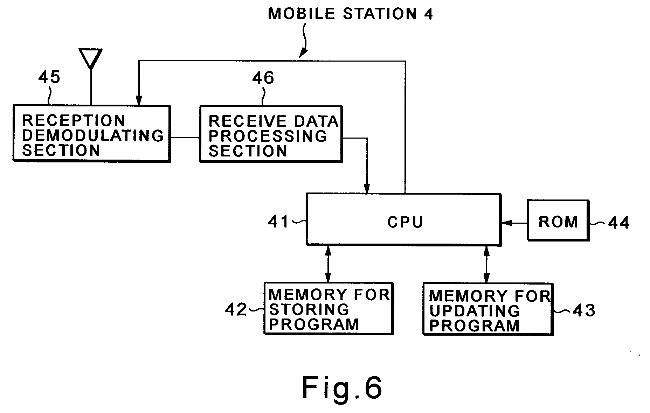

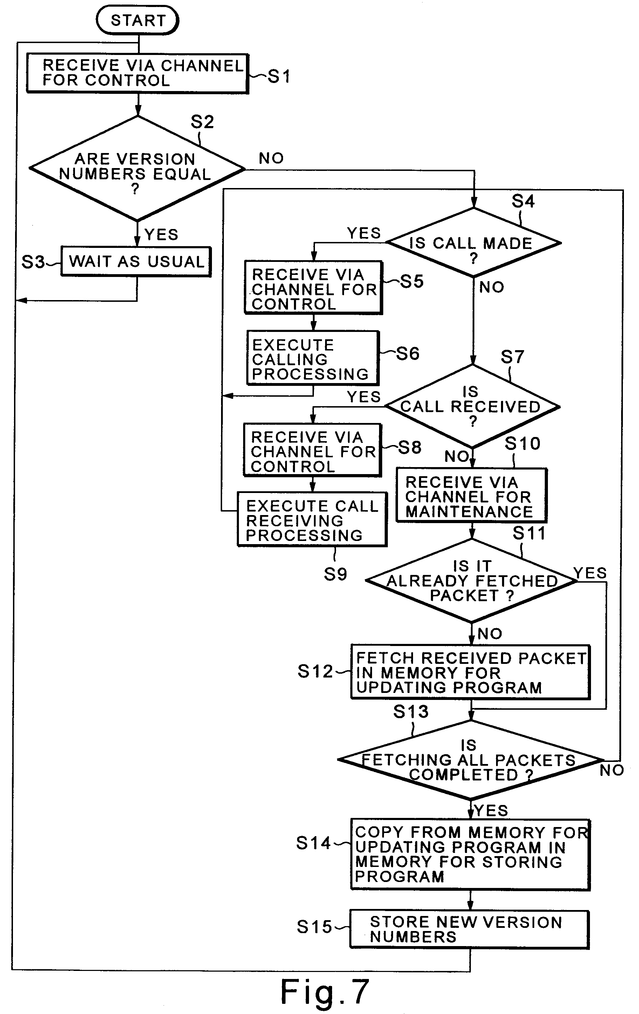

Fig. 6 is a block diagram showing an embodiment of a part related to down-loading a program of a mobile station 4 shown in Fig. 1. The mobile station 4 is provided with a memory 42 for storing a program composed of an erasable non-volatile memory for storing the program, CPU 41 for executing a program stored in the memory 42 for storing a program, a memory 43 for updating the program composed of an erasable non-volatile memory for temporarily storing the program during down-loading, ROM 44 in which the mobile number such as a telephone number of the mobile station 4 is stored, a reception demodulating section 45 and a receive data processing section 46. A program stored in the memory 42 for storing a program instructs CPU 41 to execute processing shown in a flowchart in Fig. 7 by being read by CPU 41 and controlling the operation of CPU 41.

Next, the operation of this embodiment will be described. First, operation related to down-loading a program for operating the network control station 2 shown in Fig. 2 will be described.

The control channel information sending processing section 26 in the network control station 2 generates and outputs control channel information in a format shown in Fig. 4 in which the latest version number k stored in the register 27 is stored in the version number part 52. Control channel information output from the control channel information sending processing section 26 is sent to the communication satellite 1 via the control channel modulating section 29, the sending section 31 and the channel for control 5 and is sent to the whole network from the communication satellite 1 via the channel for control 5.

The packet generating circuit 24 in the network control station 2 stores the count value i (a packet number) of the counter 25 in the packet number part 71 every time a divided part Pi of a program is read from the memory 23 and stores a total packet number N stored in the register 28 in the total packet number part 72. The packet generating circuit also generates and outputs a packet shown in Fig. 5 in which a version number k stored in the register 27 is stored in the version number part 73, a divided part Pi of a program read from the memory 23 is stored in the data part 74 and an error-detecting code is stored in the error-detecting code part 75.

A packet output from the packet generating circuit 24 is sent to the communication satellite 1 via the maintenance channel modulating section 30, the sending section 31 and the channel for maintenance 7 and is sent from the communication satellite 1 to the whole network via the channel for maintenance 7.

Next, the operation related to down-loading a program of a mobile station shown in Fig. 6 will be described.

When a power source is turned on, CPU 41 in the mobile station 4 outputs a control signal to the reception demodulating section 45 as shown in the flowchart in Fig. 7 and switches a receiving channel to the channel for control 5 in a step S1. Hereby, the reception demodulating section 45 receives and demodulates a signal via the channel for control 5, outputs it to the receive data processing section 46, the receive data processing section 46 executes descrambling processing, error correction processing and others for a signal output from the reception demodulating section 45 and outputs the signal as control channel information.

When control channel information is output from the receive data processing section 46, CPU 41 compares a version number stored in the version number part 52 and the version number stored in a predetermined area (an area different from an area in which a program is stored) of the memory 42 for storing a program of a program currently stored in the memory 42 for storing a program in a step S2.

As a program currently stored in the memory 42 for storing a program is the latest version program if the version numbers are equal (Y in S2), control proceeds to a normal wait state and it is awaited in a step S3 that a call setting procedure is started.

In the meantime, as a program currently stored in the memory 42 for storing a program is a program in an old version if the above version numbers are not equal (N in S2), the following processing is executed to fetch the latest version program.

CPU 41 judges whether a call is made or not or whether a call to the mobile station 4 is received or not, if no call is made or if no call is received (N in S4 or S7), CPU applies a control signal to the reception demodulating section 45 to switch a receiving channel from the channel for control 5 to the channel for maintenance 7 in a step S10. Hereby, the reception demodulating section 45 receives, demodulates a signal via the channel for maintenance 7, outputs it to the receive data processing section 46, the receive data processing section 46 executes descrambling processing, error correction processing and others for a signal output from the reception demodulating section 45 and outputs as a packet.

When a packet is output from the receive data processing section 46, CPU 41 judges based upon a packet number stored in the packet number part 71 whether the packet is already fetched or not in a step S11. Only if CPU judges that the packet is not fetched yet (N in S11), a divided part Pi of a program stored in the data part 74 of the packet is fetched in the memory 43 for updating a program in a step S12.

Afterward, CPU 41 judges based upon a total packet number stored in the total packet number part 72 and the number of already fetched packets whether fetching all packets is completed or not in a step S13. If fetching all packets is not completed (N in S13), CPU judges again whether a call is made or not or whether a call to the mobile station 4 is received or not in the steps S4 and S7. A reason for processing in the steps S4 and S7 is that down-loading the latest version program is prevented from interfering with calling processing and call receiving processing.

In the processing in S4, a call from a handset, a facsimile, a data terminal (respectively not shown) and others respectively connected to a mobile station 4 for example has only to be monitored. Therefore, even while the latest version program is down-loaded via the channel for maintenance 7, the processing in S4 can be simultaneously processed in parallel. However, as a called message is informed via the channel for control 5, the processing in S7 cannot be executed during receiving via the channel for maintenance 7. A network is characterized so that a called message to a mobile station is normally informed only in a frame with a determined frame number. Making the most of the characteristic, a receiving channel is switched to the channel for control 5 only when current timing is the receiving timing of a frame in which the mobile station may receive a called message and it is judged whether a call to the mobile station is received or not. The frame number of a frame in which the mobile station may receive a called message can be obtained based upon the mobile number of the mobile station stored in ROM 44. As a packet number stored in the packet number part 71 has predetermined relation with a frame number stored in the frame number part 51 as described above, it can be judged based upon a packet number stored in the packet number part 71 whether it is the receiving timing of a frame in which the mobile station may receive a called message or not. As described above, down-loading a program can be executed at high speed by switching a receiving channel to the channel for control 5 and judging whether a call to the mobile station is received or not only in the case of the receiving timing of a frame in which a called message to the mobile station may be received.

If it is judged in S4 that a call is made, CPU 41 switches a receiving channel to the channel for control 5 and executes normal calling processing in S5 and S6. If it is judged in S7 that a call is received, CPU switches a receiving channel to the channel for control 5 and executes normal call receiving processing in S8 and S9.

In the meantime, if it is judged that no call is made or that no call to the mobile station is received (N in S4 or S7), the similar processing to that described above is executed in the steps S10 to S13.

If it is judged in the step S13 that fetching all packets is completed, CPU 41 copies the latest version program fetched in the memory 42 for storing a program in the memory 43 for updating a program and stores the latest version number in a predetermined area of the memory 43 for updating a program in steps S14 and S15. The processing in S14 and S15 is executed by a program for copying stored in a specific area of the memory 43 for updating a program. That is, only a jump instruction for jumping to the head of the above program for copying is described in a program stored in the memory 43 for updating a program and actual processing in S14 and S15 is executed by the program for copying.

As described above, according to this embodiment, the latest version program can be down-loaded without requiring the owner of a mobile station 4 to prepare a special device and without executing special operation. As the network control station 2 cyclicly sends plural packets and a total packet number N and a packet number i are included in each packet, a mobile station 4 may start processing for fetching a program at arbitrary timing and even if fetching a packet fails due to a data error, the packet can be fetched in the next cycle. As the memory 43 for updating a program is composed of an erasable non-volatile memory, a packet fetched formerly can be utilized when a power source is turned on next even if the power source of a mobile station 4 is turned off during fetching a packet and fetching newly from the beginning is not required.

Next, another embodiment of the present invention will be described.

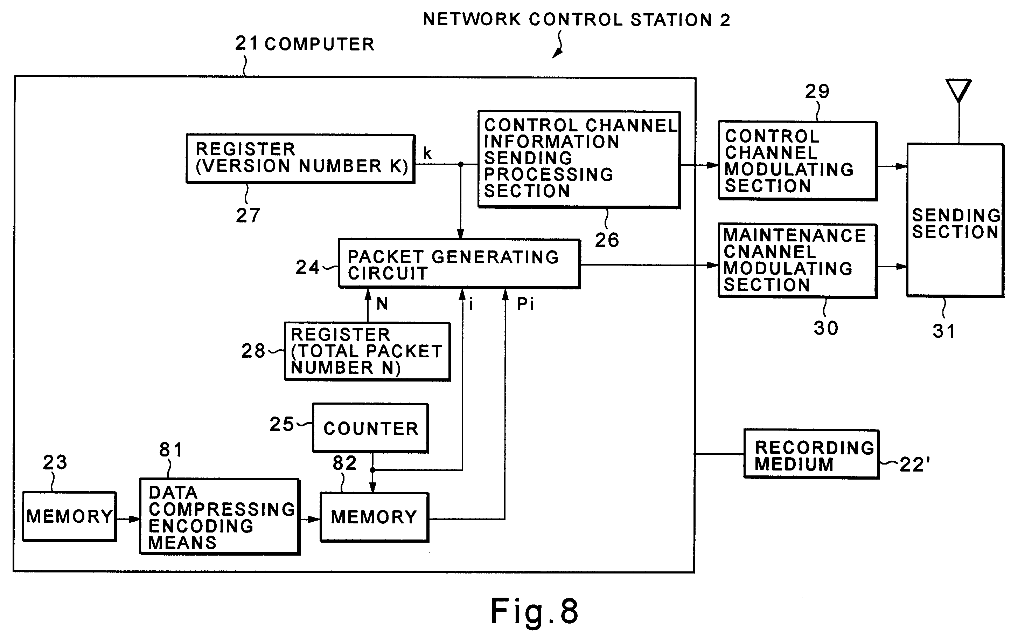

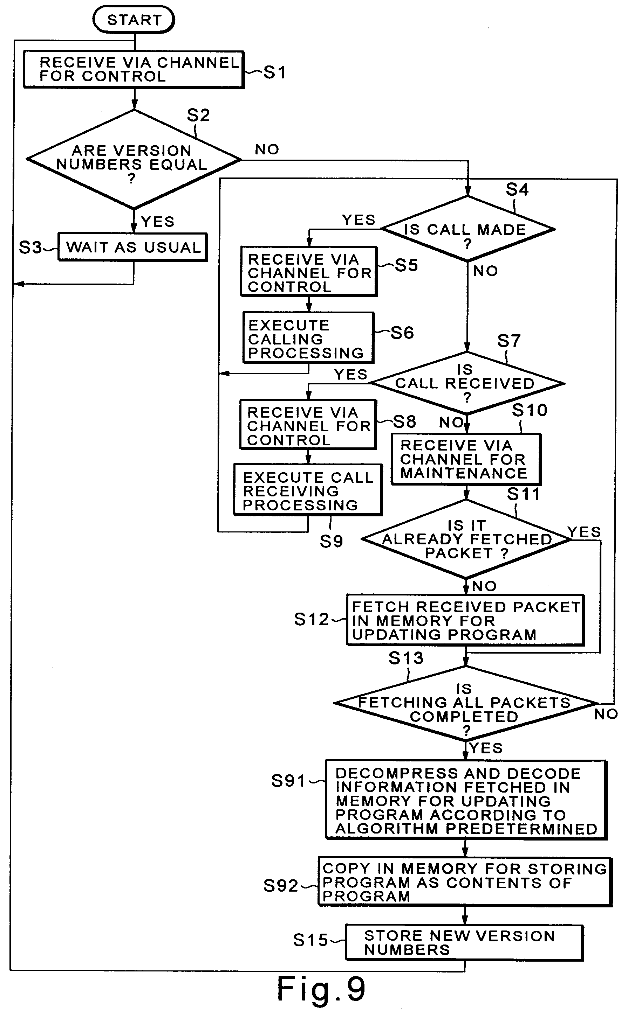

Fig. 8 shows the configuration of a part related to down-loading a program of the network control station 2 shown in Fig. 1 in another embodiment of the present invention and another embodiment of the present invention is realized by instructing the mobile station 4 shown in Fig. 6 to execute processing shown in a flowchart in Fig. 9.

The network control station 2 shown in Fig. 8 is different from the network control station 2 shown in Fig. 2 in that a computer 21' is provided in place of the computer 21 and a recording medium 22' is provided in place of the recording medium 22.

In the computer 21', data compressing encoding means 81 and a memory 82 in which a program data in which is compressed and encoded is stored are added to the configuration with which the computer 21 is provided. In the embodiment shown in Fig. 2, the count value of the counter 25 is input to the memory 23 and a divided part of a program output from the memory 23 is input to the packet generating circuit 24. In the meantime, in this embodiment, the count value of a counter 25 is input to the memory 82 and a divide part of a compressed program output from the memory 82 is input to a packet generating circuit 24. The recording medium 22' connected to the computer 21' is a disk, a semiconductor memory and the other recording medium. The computer 21' functions as the packet generating circuit 24, the counter 25, a control channel information sending processing section 26 and data compressing encoding means 81 by reading a program by the computer 21' and controlling the operation of the computer 21'.

Next, the operation of this embodiment will be described.

First, the operation related to down-loading a program of the network control station 2 will be described. In this embodiment, as the latest version program is compressed, encoded and down-loaded, first the latest version program stored in the memory 23 is input to the data compressing encoding means 81. The data compressing encoding means 81 compresses and encodes the input program according to predetermined algorithm and stores the compressed and encoded program (the compressed program) in the memory 82.

Afterward, the operation of the counter 25 is started. Hereby, each part (divided parts of the compressed program) P1' to PN' when the compressed program is equally divided into N pieces are output from the memory 82 according to the count value of the counter 25.

The packet shown in Fig. 5 in which the packet generating circuit 24 stores a count value i (a packet number) of the counter 25 in a packet number part 71 and stores a total packet number N stored in a register 28 in a total packet number part 72, also stores a version number k stored in a register 27 in a version number part 73, further, stores a divided part Pi' of a compressed program read from the memory 82 in a data part 74 and stores an error-detecting code in an error-detecting code part 75 is generated. A packet generated by the packet generating circuit 24 is sent to a communication satellite 1 via a maintenance channel modulating section 30, a sending section 31 and a channel for maintenance 7 and is sent to the whole network from the communication satellite 1 via the channel for maintenance 7.

The control channel information sending processing section 26 generates and outputs control channel information in the format shown in Fig. 4 in which the latest version number k stored in the register 27 is stored in the version number part 52. The control channel information output from the control channel information sending processing section 26 is sent to the communication satellite 1 via a control channel modulating section 29, the sending section 31 and the channel for control 5 and is sent to the whole network from the communication satellite 1 via the channel for control 5.

Next, referring to Fig. 9, the operation related to down-loading a program of a mobile station 4 will be described. If the latest version and the version number of a program currently used by the mobile station 4 are different, processing in steps S4 to S13 is also executed in this embodiment and a divided part Pi' of a compressed program is stored in a memory 43 for updating a program. At that time, if a call is made or if a call is received (Y in S4 or S7), calling processing or call receiving processing is given priority as in the above embodiment.

When the compressed program is all fetched in the memory 43 for updating a program (Y in S13), it is decompressed and decoded according to predetermined algorithm and the decompressed and decoded program is copied in a memory 42 for storing a program as the latest version program in steps S91 and S92. Afterward, the latest version number is stored in a predetermined area of the memory 42 for storing a program as in the above embodiment in a step S15.

As described above, as in the method of down-loading the mobile station operating program according to the present invention, the network control station sends the version number of the latest version program using the channel for control and sends the latest version program in a packet format using the newly prepared channel for maintenance, if a version number sent via the channel for control and the version number of a program currently used by a mobile station each mobile station are different, each mobile station once stores the latest version program sent in the packet format via the channel for maintenance in the memory for updating a program and afterward, copies the latest version program in the memory for storing a program, the latest version program can be down-loaded without imposing an economic burden on the owner of the mobile station and without requiring the owner of the mobile station to execute special operation.

According to the method of down-loading the mobile station operating program according to the present invention, as it can be also judged during down-loading a program whether a call is made or not or whether a call is received or not and if a call is made or if a call is received, calling processing or call receiving processing is given priority, calling processing or call receiving processing is never prevented by down-loading a program.

Further, according to the method of down-loading the mobile station operating program according to the present invention, as the program is compressed, encoded and is sent from the network control station, time required for down-loading the latest version program can be reduced and the capacity of the memory for updating a program provided to the mobile station can be reduced.

## Claims

1. A method of down-loading a program for operating a mobile station in a mobile communication network provided with a network control station and plural mobile stations, comprising:
a step 1 in which said network control station sends the version number of the latest program to said mobile station via a first channel;
a step 2 in which said network control station divides the latest program in plural pieces and cyclicly sends each part to said mobile station as a packet via a second channel;
a step 3 in which said each mobile station judges whether said version number and the version number of a program stored in the mobile station are equal or not;
a step 4 in which said each mobile station switches a receiving channel from said first channel to said second channel if both version numbers are not equal;
a step 5 in which said each mobile station fetches said latest program sent via said second channel; and
a step 6 in which said each mobile station copies the whole program in an internal memory when the whole program is fetched.

2. A mobile station according to Claim 1, comprising:
a step 1 in which it is judged whether a call is made or not every time the contents of said packet are fetched in a memory;
a step 2 in which it is judged whether it is timing at which a called message sent to the mobile station via said first channel may be received or not;
a step 3 in which if it is judged that a call is made, calling processing is given priority;
a step 4 in which if it is judged that it is timing at which a called message may be received, further, a receiving channel is switched from said second channel to said first channel and it is judged whether a call is received by the mobile station or not; and
a step 5 in which if it is judged that a call is received, call receiving processing is given priority.

3. A method of down-loading a program for operating a mobile station in said mobile communication network according to Claim 1, further comprising:
a step 1 in which said network control station compresses and encodes the latest program, divides it into plural pieces and cyclicly sends each part to said mobile station as a packet via a second channel instead of dividing the latest program in plural pieces and cyclicly sending each part to said mobile station as a packet via the second channel; and
a step 2 in which said each mobile station decompresses and decodes the program beforehand when it is copied in said memory.

4. A method of down-loading a program for operating a mobile station in a mobile communication network provided with a network control station and plural mobile stations, comprising:
a step 1 in which said network control station sends the latest version number of a program for operating a mobile station using a channel for control and cyclicly sends each part when the latest version program is divided into plural parts in a packet format using a newly provided channel for maintenance;
a step 2 in which said each mobile station judges whether the latest version number sent via said channel for control and the version number stored in a memory for storing a program of the mobile station of the program for operating the mobile station are equal or not; and
a step 3 in which if both version numbers are not equal, a receiving channel is switched from the channel for control to the channel for maintenance and the latest version program fetched in said memory for updating a program is copied in said memory for storing a program by fetching the contents of a packet sent via the channel for maintenance in a memory for updating a program and fetching the contents of all packets in said memory for updating a program.

5. A mobile station according to Claim 4, comprising:
a step 1 in which every time the contents of a packet are fetched in a memory for updating a program, it is judged whether a call is made or not and it is judged whether it is timing at which a called message sent to the mobile station via a channel for control may be received or not;
a step 2 in which if it is judged that a call is made, calling processing is given priority;
a step 3 in which if it is judged that it is timing at which a called message may be received, further, a receiving channel is switched from a channel for maintenance to a channel for control and it is judged whether a call is received by the mobile station or not; and
a step 4 in which if it is judged that a call is received, call receiving processing is given priority.

6. A method of down-loading a program for operating a mobile station in said mobile communication network according to Claim 4, further comprising:
a step 1 in which said network control station cyclicly sends each part when a compressed program in which said latest version program is compressed and encoded is divided into plural parts in a packet format using said channel for maintenance instead of cyclicly sending each part when the latest version program is divided into plural parts in a packet format using said channel for maintenance; and
a step 2 in which said mobile station copies the contents stored in a memory for updating a program in the mobile station in said memory for storing a program after the contents are decompressed and decoded.

7. A mobile communication network provided with a network control station and plural mobile stations, wherein:
said network control station is provided with:
means for sending the version number of the latest program to said mobile station via a first channel; and
means for dividing the latest program into plural pieces and cyclicly sending each part to said mobile station as a packet via a second channel; and
said each mobile station is provided with:
means for judging whether said version number and the version number of a program stored in the mobile station are equal or not;
means for switching a receiving channel from said first channel to said second channel if both version numbers are not equal;
means for fetching said latest program sent via said second channel; and
means for copying the whole program in an internal memory by fetching it.

8. A recording medium readable by a device on which a program is recorded, wherein:
a program for instructing a computer for controlling a network to execute processing for sending the latest version number of a program for operating a mobile station using a channel for control and processing for cyclicly sending each part when the latest version program is divided into plural parts in a packet format using a newly provided channel for maintenance is recorded; and
a program for instructing a computer for a mobile station to execute processing for judging whether a version number sent via said channel for control and the version number stored in a memory for storing a program of the mobile station of a program for operating the mobile station are equal or not, processing for switching a receiving channel from the channel for control to the channel for maintenance and fetching the contents of a packet sent via said channel for maintenance in a memory for updating a program if both version numbers are not equal and processing for copying the latest version program fetched in said memory for updating a program in said memory for storing a program by fetching the contents of all packets in said memory for updating a program is recorded.
